# EUROPÄISCHE PATENTSCHRIFT

(11) **EP 1 121 645 B1**
(45) Veröffentlichungstag und Bekanntmachung des Hinweises auf die Patenterteilung: **02.04.2003**
(21) Anmeldenummer: 99950705.6
(22) Anmeldetag: 12.10.1999
(51) Int. Cl.: G06F 13/28

(54) **ELEKTRONISCHE STEUEREINRICHTUNG MIT EINEM PARALLELEN DATENBUS UND VERFAHREN ZUM BETREIBEN DER STEUEREINRICHTUNG**
ELECTRONIC CONTROL DEVICE COMPRISING A PARALLEL DATABUS, AND A METHOD FOR OPERATING THE CONTROL DEVICE
SYSTEME DE COMMANDE ELECTRONIQUE AVEC BUS DE DONNEES PARALLELE ET PROCEDE POUR FAIRE FONCTIONNER LEDIT SYSTEME

(30) Priorität: 12.10.1998 DE 19846913
(43) Veröffentlichungstag der Anmeldung: 08.08.2001
(73) Patentinhaber: Océ Printing Systems GmbH, 85586 Poing (DE)
(72) Erfinder: GROEGER, Hans-Detlef, D-85586 Poing (DE); BAUMGARTNER, Robert, D-85457 Wörth (DE)
(74) Vertreter: Schaumburg, Thoenes, Thurn Patentanwälte
(86) Internationale Anmeldenummer: EP9907631
(87) Internationale Veröffentlichungsnummer: WO00022537

(56) Entgegenhaltungen:
- EP-A- 0 317 466
- EP-A- 0 582 535
- WO-A-91/06058
- WO-A-91/10958
- MAYER F ET AL: "MESSAGE PASSING-PROTOKOLLE IN EINEM VERTEILTEN HETEROGENEN MULTIBUS-II-MEHRRECHNERSYSTEM" AUTOMATISIERUNGSTECHNISCHE PRAXIS - ATP,DE,OLDENBOURG VERLAG. MUNCHEN, Bd. 37, Nr. 12, Seite 42-44,46-50, XP000542307 ISSN: 0178-2320
- FURRER F J: "SYSTEM- UND SOFTWARE-ARCHITEKTUR DES MULTIBUS-II" ELEKTRONIK,DE,FRANZIS VERLAG GMBH. MUNCHEN, Bd. 38, Nr. 2, Seite 75-76,78-80 XP000094511 ISSN: 0013-5658

## Beschreibung

Die Erfindung betrifft eine Steuereinrichtung mit einem parallelen Datenbus und ein Verfahren zum Betreiben der Steuereinrichtung.

Die Erfindung bezieht sich insbesondere auf eine elektronische Steuereinrichtung, die einen großen Datenstrom verarbeiten muß, wie z.B. eine Steuereinrichtung zum Aufbereiten von Druckdaten für einen Hochleistungsdrucker.

In "Das Druckbuch - Technik und Technologie der Hochleistungsdrucker von Océ Printing Systems GmbH - Drucktechnologien" Ausgabe 3c, Mai 1998, ISBN 3-00-001019-X ist eine als "SRA Controller" (SRA: Skalierbare Raster Architektur) bezeichnete Steuereinrichtung zum Ansteuern eines Hochleistungsdruckers beschrieben.

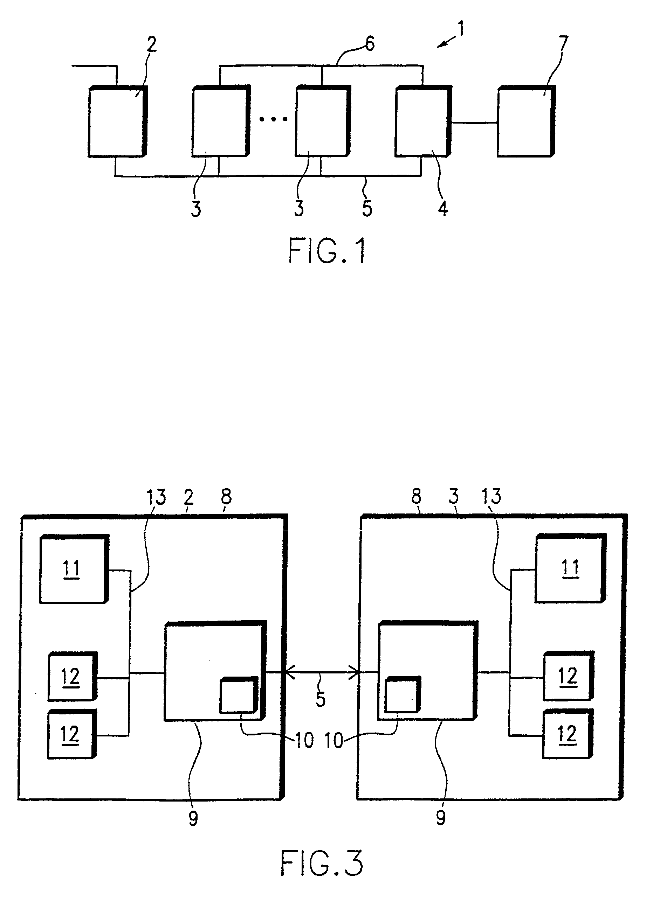

Der Aufbau dieser bekannten Steuereinrichtung ist schematisch in Fig. 1 gezeigt. Eine solche Steuereinrichtung 1 weist ein I/O-Modul 2, ein oder mehrere Rastermodule 3 und ein Serialiser-Modul 4 auf. Die einzelnen Module 2 bis 4 sind über einen parallelen Datenbus 5 miteinander verbunden. Die Rastermodule 3 und das Serialiser-Modul 4 sind über einen weiteren Pixel-Bus 6 miteinander verbunden. An das Serialiser-Modul 4 ist ein Hochleistungsdrucker 7 angeschlossen.

Das I/O-Modul 2 empfängt die Druckinformationen von einer Computereinrichtung, die ein Großrechnersystem oder auch ein Rechnernetzwerk sein kann. Die Druckinformation wird von dem I/O-Modul 2 an die Rastermodule 3 und das Serialiser-Modul 4 weitergeleitet, wobei die Rastermodule 3 die Druckbildinformationen empfangen und zu einem von dem Hochleistungsdrucker 7 verarbeitbaren Druckbilddatenstrom umsetzen. Diese Druckbilddatenströme werden von den Rastermodulen 3 über den Pixel-Bus 6 an das Serialiser-Modul 4 übertragen, das die Datenströme in einer vorbestimmten Folge aufreiht und an den Hochleistungsdrucker 7 weiterleitet.

Der Datenbus ist z.B. ein Multibus II (Multibus ist eine eingetragene Marke der Intel Corp.). Der Multibus II ist ein synchronisierter Bus, der in IEEE Standard for a High-Performance Synchronous 32-Bit Bus: MULTIBUS II, The Institute of Electrical and Electronics Engineers, Inc., 345 East 47^{th} Street, NY 10017, USA, 1988 festgelegt ist. Im nachfolgenden wird der "MULTIBUS II" vereinfacht als "Multibus" bezeichnet.

Die Module 2 bis 4 der Steuereinrichtung 1 sind jeweils mit einem Prozessor versehen. Eine Interprozessor-Kommunikation erfolgt bei auf dem Multibus basierenden Systemen durch einen Nachrichtenaustausch (Message-Transfer), wobei zur Übertragung von Daten Nachrichten mit Datenpaketen mit einer vorbestimmten Länge übermittelt werden.

Beim Multibus gibt es zwei Arten dieser Nachrichten, nämlich sogenannte unangeforderte Nachrichten (unsolicited messages) und angeforderte Nachrichten (solicited messages). Die unangeforderten Nachrichten können als "intelligente Interrupts" betrachtet werden, wobei bis zu 255 Interruptquellen (die Anzahl gültiger Adressen) eine unangeforderte Nachricht aussenden können. Mit einer unangeforderten Nachricht können 28 Byte Statusinformationen übertragen werden.

Die Eigenschaften einer unangeforderten Nachricht sind, daß deren Ankunft vom Empfänger nicht vorhergesehen werden kann, sie eine begrenzte Länge und eine begrenzte Übertragungszeit aufweisen.

Angeforderte Nachrichten sind Nachrichten, die zum Übertragen von Datenpaketen dienen, wobei zunächst mittels unangeforderter Nachrichten (buffer request message, buffer grant message und buffer reject message) die Übertragungsmodalitäten (Übertragungsrate, Datenmenge, ...) verhandelt werden.

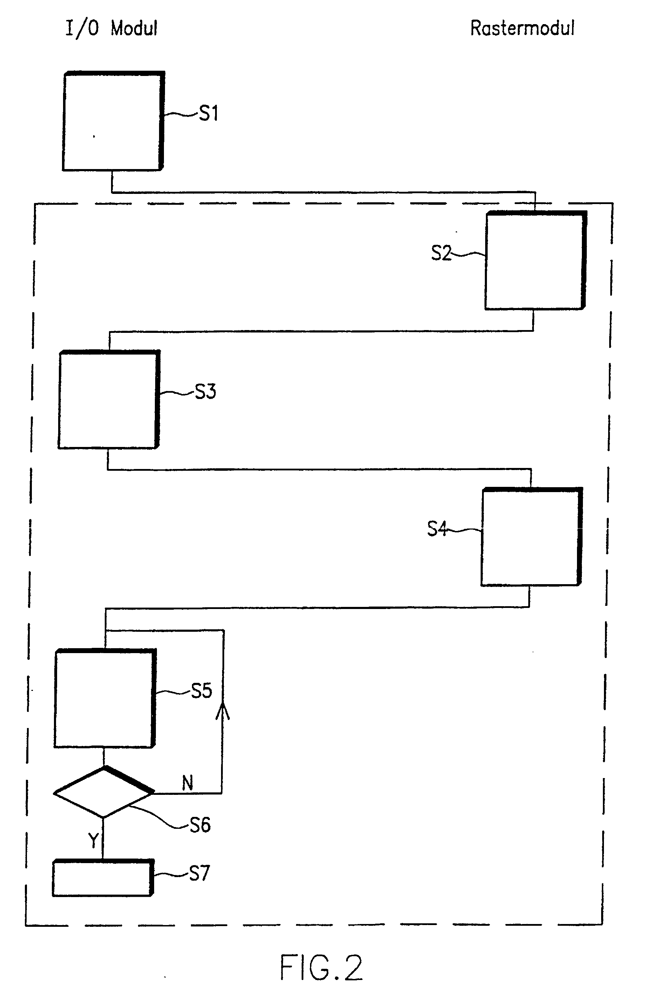

Ein Datentransfer vom I/O-Modul 2 zu den Rastermodulen 3 über den Datenbus 5 ist in einem Flußdiagramm in Fig. 2 gezeigt. Hierbei sind die Aktionen, die am I/O-Modul 2 stattfinden, auf der linken Seite und die Aktionen, die am Rastermodul 3 ausgeführt werden, auf der rechten Seite dargestellt.

Im Schritt S1 schickt das I/O-Modul 2 an ein Rastermodul 3 eine Nachricht, daß Daten vorhanden sind. Diese Nachricht wird von dem Prozessor des I/O-Moduls erzeugt. Hierauf schickt das Rastermodul, falls es Daten benötigt, im Schritt S2 eine entsprechende Nachricht. Diese Nachricht wird vom Prozessor des Rastermoduls 2 ausgelöst. Hat das I/O-Modul 2 diese Nachricht empfangen, programmiert der Prozessor einen DMA-Controller des I/O-Moduls zum Senden der gewünschten Daten an das Raster-Modul und schickt eine buffer-request-Nachricht an das Raster-Modul (Schritt S3). Kann das Raster-Modul diese Daten aufnehmen, programmiert deren Prozessor einen DMA-Controller zum Empfangen der Daten und sendet eine buffer-grant-Nachricht an das I/O-Modul (Schritt S4).

Mit dem Empfang der buffer-grant-Nachricht durch das I/O-Modul sind die "Verhandlungen" abgeschlossen und das I/O-Modul sendet eine ein Datenpaket enthaltende Daten-Nachricht an das Rastermodul (Schritt S5). Eine solche Daten-Nachricht wird so oft übertragen, bis alle Daten an das Raster-Modul übertragen worden sind, wobei dies in einem Schritt S6 geprüft wird.

Sind alle Daten an das Raster-Modul gesendet worden, dann ist der Datentransfer beendet (S7).

Die Schritte S2 bis S6 bilden eine angeforderte Nachricht (gestrichelter Rahmen), wobei die Verhandlung (S2 bis S4) mittels der die Daten angefordert werden, mit unangeforderten Nachrichten ausgeführt wird. Die einzelnen Nachrichten der Schritte S2 bis S4 werden jeweils von den Prozessoren der Module 2, 3 erzeugt.

Die oben beschriebene Interprozessor-Kommunikation mittels eines Nachrichtenaustausches (Message Transfer) ist in F. Mayer et.al. "Message Passing-Protokolle in einem verteilten heterogenen Multibus-II-Mehrrechnersystem" Automatisierungstechnische Praxis - ATP DE, Oldenburg Verlag, München, Band 37, Nr. 12, Seite 42 bis 44, 46 bis 50, XP000542307, ISSN:0178-2320 unter dem Stichwort "Message Passing" beschrieben.

Aus der WO-A-91/06058 ist ein Speicher- und Datenbanksystem zum Speichern von Dokumenten in Form von Bilddaten bekannt, das eine an einen Datenbus angeschlossene Speicher-Prozessor-Einheit aufweist, die nach dem Multibus II-Protokoll arbeitet und demgemäß die oben beschriebenen Verfahrensschritte S1 bis S7 bei der Datenübertragung ausführt. Diese Speicher-Prozessor-Einheit ist mit einem ADMA-Controller versehen, der nach der Verhandlungsphase (Schritte S2 bis S4) selbsttätig die übertragung der Nachrichten ausführt (Schritte S5 und S6).

Zur Steuerung des Einlesens und Ausgebens von Speichersignalen in Mikrocomputern sind sogenannte DMA-Controller bekannt. Deren typischer Aufbau und Funktionsweise sind beispielsweise in Tietze, Schenk, "Halbleiter-Schaltungstechnik", Springer-Verlag (1985) auf den Seiten 672-675 beschrieben. In Messmer, "PC-Hardware", Addison-Wesley Verlag, 3.Auflage (1995) sind auf den Seiten 515 bis 516 typische Anwendungen und Funktionsweisen von DMA-Controllern genannt.

Aus der DE-T2-38 52 378 geht ein Mechanismus und ein Verfahren zur entgegengesetzten Flußsteuerung in einem Bussystem hervor, bei dem mittels eines Busverwalters das Bussystems gesteuert wird. Bei diesem bekannten Bussystem werden spezielle Busnachrichten verwendet, um einen auf einer Buseinheit ausführenden Prozess über ein Ereignis oder über eine nicht erwartete Eingabe von einer anderen Buseinheit zu informieren. Die Buseinheit, welche die Nachricht empfängt, weiß sofort, wohin die Nachricht weitergeleitet werden muß, anstatt vom Absender ableiten zu müssen, wohin die Nachricht weiterzuleiten ist. Der unterbrochene Prozess muß nicht zum Sender der Nachricht zurückgehen, um zu bestimmen, was zu tun ist. Da die Nachricht eine Meldung über das, was zu tun ist, enthält, wird wenig Zeit damit verschwendet, den Grund für das Senden der Nachricht zu ermitteln.

Mit diesem Bussystem können somit mehrere Buseinheiten schnell angesprochen und deren Verarbeitungszustand umgehend verändert Werden.

Der Erfindung liegt die Aufgabe zugrunde, eine Steuereinrichtung zu schaffen, die einen parallelen Datenbus und mehrere jeweils mit einem Prozessor versehene Baugruppen aufweist, die über den Datenbus kommunizieren können, so weiterzubilden, daß ein großer Datenstrom schneller und effektiver verarbeitet werden kann. Eine weitere Aufgabe der Erfindung liegt in der Schaffung eines Verfahrens zum Betreiben einer solchen Steuereinrichtung, mit dem einfach und effektiv ein großer Datenstrom in der Steuereinrichtung bewältigt werden kann.

Die Aufgabe wird durch eine Vorrichtung mit den Merkmalen des Anspruchs 1 und durch ein Verfahren mit den Merkmalen des Anspruchs 5 gelöst. Vorteilhafte Ausgestaltungen der Erfindung sind in den Unteransprüchen angegeben.

Die erfindungsgemäße elektronische Steuereinrichtung ist mit einem parallelen Datenbus und mehreren mit dem Datenbus verbundener Baugruppen versehen, die jeweils einen Prozessor und eine Speichereinrichtung aufweisen und mittels eines Bus-Controllers mit dem Datenbus verbunden sind, wobei Daten zwischen einer Sender-Baugruppe und einer Empfänger-Baugruppe mittels Nachrichten übertragen werden. Die Erfindung zeichnet sich dadurch aus, daß der Bus-Controller der Sender-Baugruppe so ausgebildet ist, daß er auf eine Anforderungs-Nachricht der Empfänger-Baugruppe den DMA-Controller der Sender-Baugruppe zum Auslesen von Daten aus der Speichereinrichtung der Sender-Baugruppe und zum Übertragen an die Empfänger-Baugruppe programmiert, ohne daß der Prozessor der Sender-Baugruppe in Anspruch genommen wird. Die Empfänger-Baugruppe löst somit durch ihre Anforderungs-Nachricht bei der Sender-Baugruppe eine automatische Übertragung der Daten aus. Dies führt zu einer wesentlichen Entlastung der Sender-Baugruppe, da die Daten mittels eines DMA-Controllers direkt wesentlich schneller und effektiver ausgelesen werden können und der Prozessor nicht lange durch eine solche Datenübertragung belegt ist. Zudem wird die eingangs beschriebene "Verhandlung", die beim herkömmlichen Multibus drei Nachrichtenübermittlungen umfaßt (siehe Fig. 2) auf die Übermittlung einer einzigen Anforderungs-Nachricht reduziert, wodurch eine weitere Vereinfachung und Beschleunigung des Übertragungsvorganges erzielt wird.

Das im Anspruch 5 angegebene Verfahren zum Betreiben einer solchen elektronischen Steuereinrichtung korrespondiert zu der Vorrichtung nach Anspruch 1. Hierdurch kann ein großer Datenstrom von der Sender-Baugruppe zur Empfänger-Baugruppe schnell und effektiv übertragen werden, so daß die Steuereinrichtung einen großen Datenstrom bewältigen kann.

Bei einer bevorzugten Ausführungsform der Erfindung werden die zum Programmieren des auf der Sender-Baugruppe angeordneten DMA-Contollers notwendigen Daten mittels der Anforderungs-Nachricht von der Empfänger-Baugruppe zur Sender-Baugruppe übermittelt. Die Empfänger-Baugruppe steuert somit mit der Anforderungs-Nachricht die Datenübertragung von der Sender-Baugruppe.

Mit dem erfindungsgemäßen Verfahren können die einzelnen Empfänger-Baugruppen die von ihnen gewünschten Daten unabhängig und gleichzeitig von der Sender-Baugruppe abrufen. Durch die automatische Abarbeitung der Anforderungs-Nachrichten in der Sender-Baugruppe kann diese die Daten sehr schnell zur Verfügung stellen. Die Vereinfachung des Übertragungsprotokolls bewirkt eine weitere Beschleunigung des Übertragungsvorganges.

Die Erfindung wird nachfolgend anhand eines in den Zeichnungen dargestellten Ausführungsbeispieles näher erläutert. Es zeigen schematisch:
- Figur 1: den grundlegenden Aufbau einer Steuereinrichtung zum Aufbereiten von Druckdaten für einen Hochleistungsdrucker in einem Blockschaltbild,
- Figur 2: ein Flußdiagramm eines Datentransfers nach einem vom Multibus bekannten Übertragungsverfahren,
- Figur 3: zwei über einen Datenbus verbundene Baugruppen,
- Figur 4: den erfindungsgemäßen Datentransfer in einem Flußdiagramm,
- Figur 5: den Aufbau einer Anforderungs-Nachricht in einem Blockschaltbild,
- Figur 6: den Aufbau einer Daten-Nachricht in einem Blockschaltbild, und
- Figur 7: den Aufbau eines Eintrages in einer an der SenderBaugruppe vorgesehenen Puffers in einem Blockschaltbild.

Die Erfindung wird anhand eines Ausführungsbeispieles einer elektronischen Steuereinrichtung 1 zum Ansteuern eines Hochleistungsdruckers erläutert, die den gleichen Aufbau wie die in Fig. 1 dargestellte, bekannte Steuereinrichtung aufweist und mit einem I/O-Modul 2, einem oder mehreren Rastermodulen 3 und einem Serialiser-Modul 4 versehen ist. Die einzelnen Module 2 bis 4 sind über einen parallelen Datenbus 5 miteinander verbunden. Die Rastermodule 3 und das Serialiser-Modul 4 sind über einen weiteren Pixel-Bus 6 miteinander verbunden. An das Serialiser-Modul 4 ist der Hochleistungsdrucker 7 angeschlossen.

Der Datenbus 5 ist eine Weiterentwicklung des Multibusses und ist zu diesem im wesentlichen kompatibel.

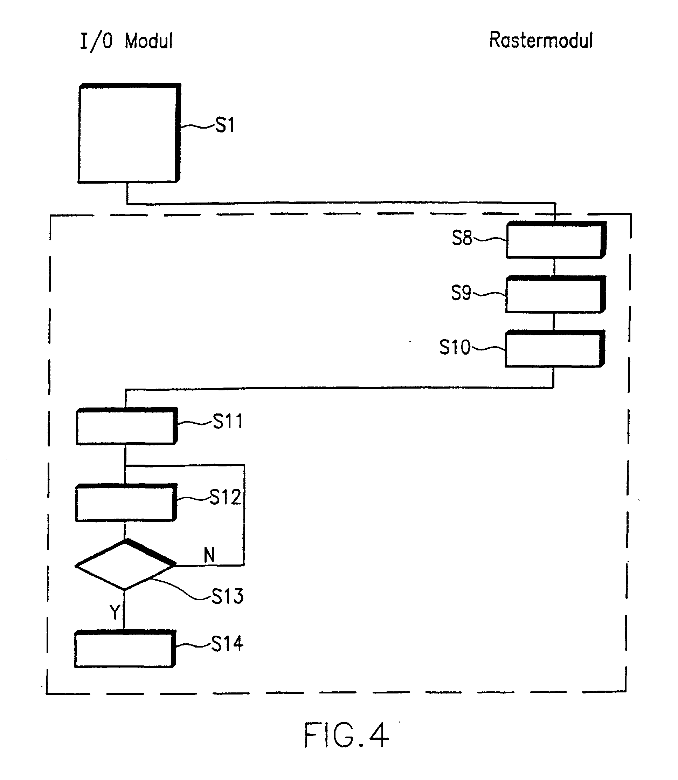

Die Module 2 bis 4 stellen jeweils eine mit dem Datenbus 5 verbundene Baugruppe 8 dar. Zwei solche Baugruppe 8, nämlich das I/O-Modul 2 und das Rastermodul 4 sind schematisch in Fig. 3 gezeigt.

Die Baugruppen 8 weisen jeweils einen Bus-Controller 9 auf, die mit einem internen, in den Bus-Controller 9 integrierten DMA-Controller 10 versehen sind. Die Baugruppen besitzen jeweils einen Prozessor 11 und Speichereinrichtungen 12, die mittels eines internen Rechnerbusses 13 miteinander und mit dem Bus-Controller 9 verbunden sind. Die Baugruppen 8 weisen weitere Elemente auf, wie z.B. Bausteine und Leitungen für weitere Schnittstellen und dergleichen, die jedoch zur Vereinfachung der Darstellung in Fig. 3 nicht gezeigt sind.

Nachfolgend wird anhand von dem in Fig. 4 gezeigten Flußdiagramm der erfindungsgemäße automatische angeforderte Nachrichtentransfer erläutert. Hierbei sind die Aktionen, die am I/O-Modul 2 stattfinden, wiederum auf der linken Seite und die Aktionen, die am Rastermodul 3 ausgeführt werden, auf der rechten Seite dargestellt.

Während des Schritts S1 schickt das I/O-Modul 2 an ein Rastermodul 3 eine Nachricht, daß Daten vorhanden sind. Diese Nachricht wird von dem Prozessor des I/O-Moduls erzeugt und entspricht dem Schritt S1 gemäß dem in Fig. 2 gezeigten bekannten Verfahren.

Hierauf prüft das Rastermodul 3 in einem Schritt S8, ob es die vom I/O-Modul 2 angebotenen Daten benötigt und ob genügend Speicherplatz zur Aufnahme der Daten vorhanden ist. Diese Prüfung erfolgt durch den Prozessor 11 des Rastermoduls 3.

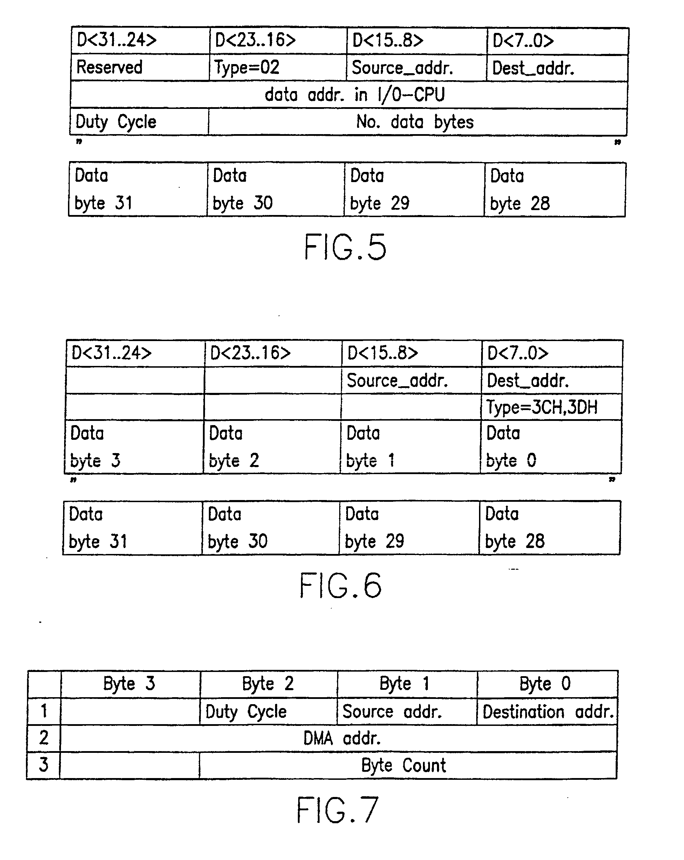

Sind diese Daten nicht vorhanden, programmiert der Prozessor 11 in einem Schritt S9 den DMA-Controller 10 im Bus-Controller 9 für den Empfang eines Datenpakets und schreibt eine Data-Request-Nachricht in den Bus-Controller 9. Die Data-Request-Nachricht enthält die Adresse der Daten im Speicher des I/O-Moduls 2, die Anzahl der Datenbytes, die übertragen werden sollen, und einen sogenannten Duty-Cycle für das Senden der angeforderten Nachrichten. Mit dem Duty-Cycle wird festgelegt, in welchem Abstand angeforderte Nachrichten über den Datenbus 5 gesendet werden. Darüber hinaus können in dieser Data-Request-Nachricht noch weitere Daten enthalten sein, die den jeweiligen Datentransfer näher bestimmen. Der Aufbau dieser Data-Request-Nachricht ist in Fig. 5 gezeigt. Die Data-Request-Nachricht stellt eine unangeforderte Nachricht dar. Der Nachrichten-Typ hat den Wert 02H.

Diese Data-Request-Nachricht wird während des Schrittes S10 vom Bus-Controller 9 des Rastermoduls 3 an das I/O-Modul 2 über den Datenbus 5 gesandt.

Nach Maßgabe der in der Data-Request-Nachricht enthaltenen Daten (Adresse der Daten im Speicher des I/O-Moduls, Anzahl der Datenbytes, Duty-Cycle, usw.) programmiert der Bus-Controller 9 des I/O-Moduls 2 seinen DMA-Controller 10 mit der Adresse und der Anzahl der zu übertragenden Bytes einer Daten-Nachricht (Schritt S11).

Die Struktur einer solchen Daten-Nachricht ist in Fig. 6 gezeigt. Eine Daten-Nachricht weist eine Source-Adresse und eine Destination-Adresse auf, wobei hierfür die Belegung der Data-Request-Nachricht gilt, so daß die Source-Adresse die Adresse der Empfänger-Baugruppe und die Destination-Adresse die Adresse der Sender-Baugruppe ist. Es sind zwei Typen von Daten-Nachrichten vorgesehen, nämlich der Typ 3CH und der Typ 3DH, deren Bedeutung unten näher erläutert wird. Mit der in Fig. 6 gezeigten Daten-Nachricht kann ein Datenpaket mit 32 Bytes (Byte 0 bis Byte 31) übertragen werden.

Zum Senden der in Fig. 6 gezeigten Daten-Nachricht startet der Bus-Controller im Schritt S12 den DMA-Controller 10 und packt die vom DMA-Controller 10 an den Bus-Controller 9 übermittelten Daten in ein Datenpaket. Das Datenpakete wird mittels einer Daten-Nachricht über den Datenbus 5 vom I/O-Modul 2 zum Rastermodul 3 übertragen.

Im Schritt S13 wird geprüft, ob bereits alle Daten übertragen sind. Müssen weitere Daten übertragen werden, so geht der Programmablauf auf den Schritt S12 zurück, wodurch die nächste Daten-Nachricht übertragen wird. Dieser Vorgang wird so oft wiederholt, bis alle Daten paketweise vom I/O-Modul an das Rastermodul übertragen worden sind. Die hierbei verwendeten Daten-Nachrichten sind alle, bis auf die letzte Daten-Nachricht, vom Typ 3CH. Die letzte Daten-Nachricht ist vom Typ 3DH. Mit der Übertragung aller Datenpakete ist der Datenfransfer beendet (Schritt S14). Am Rastermodul 3 wird durch den Empfang der Daten-Nachricht vom Typ 3DH ein Interrupt ausgelöst, der dem Prozessor des Rastermoduls 3 anzeigt, daß der angeforderte Datentransfer beendet ist. Eine Meldung an den Prozessor des I/O-Moduls 2 erfolgt nur, wenn bei der Übertragung der Daten ein Fehler aufgetreten ist.

Die Schritte S8 bis S14 bilden den automatischen angeforderten Nachrichtentransfer (gestrichelter Rahmen). Dieser automatisch angeforderte Nachrichtentransfer umfaßt lediglich eine unangeforderte Nachricht, nämlich die Data-Request-Nachricht des Schrittes S10, und die angeforderten Daten-Nachrichten des Schrittes S14. Im Vergleich zu den angeforderten Nachrichten des bekannten Multibusses vermindert sich die Anzahl der unangeforderten Nachrichten von 3 auf 1. Hierdurch wird eine wesentliche Entlastung am Datenbus 5 erzielt.

Mit einem solchen automatischen angeforderten Nachrichtentransfer wird eine festgelegte Datenmenge von z.B. 4 KB übertragen.

Im Bus-Controller 9 des I/O-Moduls 2 ist ein Puffer vorgesehen, in dem die Parameter der automatisch angeforderten Nachrichtentransfere abgelegt werden können. Für jede Baugruppe 8, die als Empfänger-Baugruppe 3 fungieren kann, ist in diesem Puffer ein Eintrag vorgesehen. Im vorliegenden Ausführungsbeispiel weist der Puffer 21 Einträge auf. Die in den Einträgen enthaltenen Parameter sind (Fig. 7)
1. Source- und Destination-Adresse für den automatischen angeforderten Nachrichtentransfer,
2. Duty-Cycle für die Datenpakete,
3. DMA-Adresse der Daten in der Speichereinrichtung, und
4. Anzahl der Datenbytes

Der Bus-Controller 9 des I/O-Moduls kann beim Empfang einer Anforderungsnachricht prüfen, ob der dem die Anforderungs-Nachricht sendenden Rastermodul 3 zugeordnete Eintrag des Puffers bereits mit einem Datentransfer kennzeichnenden Daten beschrieben ist. Falls im Eintrag bereits die Daten eines anderen automatisch angeforderten Nachrichtentransfers enthalten sind, kann eine Fehlermeldung ausgegeben und die Anforderungs-Nachricht zurückgewiesen, um zu verhindern, daß gleichzeitig zwei Nachrichtentransfers mit demselben Rastermodul eingeleitet werden.

Der Bus-Controller 9 sorgt dafür, daß die Anforderungs-Nachrichten in der Reihenfolge ihres Eintreffens bearbeitet werden. Dies stellt sicher, daß jedes Rastermodul an die Reihe kommt.

Die Anforderungs-Nachricht wird bei einem belegten Eintrag im Puffer oder bei einem belegten Eingangspuffer, in dem die eingehenden Nachrichten zwischengespeichert werden, mit der Fehlermeldung NACK abgewiesen. Die Anforderungs-Nachricht wird daraufhin solange wiederholt, bis sie entweder abgearbeitet werden kann oder die im Protokoll festgelegte Anzahl von Wiederholungen erreicht ist. Wenn die Daten-Nachrichten nicht vom Rastermodul 3 empfangen werden können, wird auch der Fehler NACK ausgegeben und sie werden solange wiederholt, bis sie aufgenommen werden können oder die festgelegte Anzahl von Wiederholungen erreicht ist.

Hat ein Rastermodul einen automatischen angeforderten Nachrichtentransfer angestoßen und sendet es während seines eigenen Transfers weitere Data-Request-Nachrichten, so werden diese Nachrichten nicht übertragen. Stattdessen wird ein Übertragungsfehler (Transmit Error) gemeldet: Beim Auslesen der zurückgewiesenen unangeforderten Nachricht aus einem vom Multibus bekannten Error-FIFO ist ein Bit "No Resource" gesetzt.

Tritt während des Empfangs der Daten beim Rastermodul 3 ein DMA-Fehler auf, so wird im DMA-Controller 10 des Bus-Controllers 9 ein entsprechendes Statusbit gesetzt und der DMA-Controller 10 beendet von sich aus den Transfer. Werden hierdurch beim Prozessor keine unmittelbaren Aktionen ausgelöst, so ergibt sich folgender Ablauf:

Ein interner Puffer des Rastermoduls 3 für den Empfang der Daten-Nachrichten läuft voll. Weitere Daten-Nachrichten werden daher vom Rastermodul abgewiesen. Der Bus-Controller des I/O-Moduls wiederholt eine abgewiesene Daten-Nachricht noch max. 127 mal und stellt dann von sich aus den Datentransfer ein. Der Bus-Controller 9 des I/O-Moduls meldet daraufhin den Sachverhalt an seinen Prozessor weiter.

Zusätzlich läuft am Rastermodul ein interner Fail-Safe-Counter ab, der durch den Empfang einer Daten-Nachricht jedesmal auf seinen Startwert gesetzt wird. Der Ablauf des Counters wird dem Prozessor des Rastermoduls mitgeteilt, der daraufhin eine vom Multibus bekanntes Error-Recovery ausführt.

Bei einer bevorzugten Ausführungsform der Erfindung kann, um den obigen Ablauf auf der Seite des Rastermoduls zu beschleunigen (der Fail-Safe-Counter läuft in ca. 2 sec ab), der Prozessor des Rastermoduls bereits auf den DMA-Fehler reagieren, indem er den DMA-Empfangskanal des Transfers stoppt und über eine unangeforderte Nachricht an das I/O-Modul das Ende des Transfers mitteilt. Das Stoppen erfolgt beim I/O-Modul durch ein von dem Bus-Controller ausgegebenen Lösch-Befehl zum Löschen des entsprechenden DMA-Empfangskanals.

Tritt ein DMA-Fehler beim I/O-Modul auf, wird wie bei einem Fehler am Rastermodul der DMA-Kanal von der internen Ablaufsteuerung gestoppt und es werden die entsprechenden Statusbits gesetzt. Zusätzlich wird eine unaufgeforderte Nachricht an das Rastermodul gesendet, damit dieses den Empfang der Daten-Nachricht stoppt. Aufgrund dieser Nachricht gibt der Prozessor des Rastermoduls einen Stop-Befehl an den DMA-Controller und einen Lösch-Befehl an den Empfangskanal des automatisch angeforderten Nachrichtentransfers. Reagiert der Prozessor des I/O-Moduls nicht auf den DMA-Fehler, so läuft der bereits oben erwähnte Fail-Safe-Counter auf dem Rastermodul ab. Der Prozessor des Rastermoduls muß daraufhin eine unangeforderte Nachricht an das I/O-Modul senden, damit der Transfer auch vom I/O-Modul beendet wird.

Der bereits erwähnte Fail-Safe-Counter des Rastermoduls ist für den Empfang der Daten-Nachrichten vorgesehen, der jedesmal nach dem Empfang einer Daten-Nachricht des Typs 3CH neu gestartet wird. Er läuft ab, wenn innerhalb der eingestellten Zeit keine weitere Daten-Nachricht empfangen wird. In diesem Fall stoppt der Prozessor des Rastermoduls den DMA-Kanal im Bus-Controller und der Empfangskanal des automatisch angeforderten Nachrichtentransfers wird gelöscht. Zusätzlich wird an das I/O-Modul eine unangeforderte Nachricht gesandt, damit das I/O-Modul den automatischen angeforderten Nachrichtentransfer beenden kann. Hierbei ist ein Stop-Befehl für den DMA-Kanal des I/O-Moduls nicht notwendig, da dies von der internen Ablaufsteuerung des Bus-Controllers vorgenommen wird.

Ein laufender automatischer angeforderter Nachrichtentransfer kann am Rastermodul mit einem Lösch-Befehl an den entsprechenden Empfangskanal abgebrochen werden. Der Befehl wirkt sich sofort aus. Alle danach eintreffenden Daten-Nachrichten werden vom Bus-Controller mit einer vom Multibus bekannten Fehlermeldung "Transfer-Not-Understood" abgewiesen. Die Beendigung des Empfangskanals des DMA-Controllers muß ebenfalls vom Prozessor ausgeführt werden.

Ein laufender automatischer angeforderter Nachrichtentransfer wird am I/O-Modul durch folgende Aktionen abgebrochen bzw. angehalten:
a) Es ist ein Fehler am Datenbus aufgetreten. Als Fehler kommen in Betracht:
   - Die Wiederholungsrate für eine Daten-Nachricht hat den Maximalwert erreicht.
   - Bei der Übertragung der Daten-Nachricht trat ein Bus-Fehler, Bus-Timeout oder ein Agent-Error auf.
b) Es ist ein Fehler bei der DMA-Übertragung aufgetreten. Folgende Fehler kommen in Betracht:
   - Parity-Fehler
   - Page-Miss-Fehler
   - Fatal Error bei einem Transfer über den internen Rechner-Bus (PCI-Bus).
c) Der Prozessor bricht den laufenden automatischen angeforderten Nachrichtentransfer durch ein Kommando ab.

In den Fällen a) und b) wird der automatische angeforderte Nachrichtentransfer aufgrund des Fehlers von der internen Steuerung des Bus-Controllers abgebrochen. Die interne Steuerung meldet die Fehlerursache durch Setzen eines ASOMERR-Bits in einem Nachrichten-Status-Register. Ist ein korrespondierender Interrupt in einem Nachrichten-Steuer-Register freigegeben, so wird zusätzlich ein Interrupt erzeugt. Der Prozessor des I/O-Moduls kann durch das Auslesen eines dem automatischen angeforderten Nachrichtentransfer zugeordnetem ASOM-Status-Register die Fehlerursache bestimmen. Bevor erneut ein automatischer angeforderter Nachrichtentransfer aufgenommen werden kann, muß der Prozessor des I/O-Moduls einen entsprechenden Befehl (ASOMGO) absetzen.

Der Prozessor kann einen laufenden automatischen angeforderten Nachrichtentransfer zu jedem Zeitpunkt abbrechen (siehe c). Je nach dem verwendeten Befehl wird der automatische angeforderte Nachrichtentransfer noch zu Ende geführt oder sofort unterbrochen. Im letzteren Fall ist zu berücksichtigen, daß das Rastermodul auf das weitere Eintreffen von Daten-Nachrichten wartet. Es wird daher bei einer Unterbrechung eines automatisch angeforderten Nachrichtentransfers eine entsprechende Nachricht vom I/O-Modul an das Rastermodul übersandt.

Zur Protokollierung des automatischen angeforderten Nachrichtentransfers können am I/O-Modul folgende Optionen eingerichtet sein:
1. Jeder automatische angeforderte Nachrichtentransfer wird an den Prozessor des I/O-Moduls weitergegeben. Damit kann auf dem I/O-Modul festgehalten werden, von welcher Baugruppe ein automatischer angeforderter Nachrichtentransfer angefordert wurde.
2. Im Bus-Controller ist ein Register vorgesehen, das die Nachrichten-ID der den automatischen angeforderten Nachrichtentransfer anfordernden Baugruppe enthält. Dieses Register wird zu Beginn des Transfers auf die Nachrichten-ID gesetzt und am Ende wieder zurückgesetzt. Das Register kann vom Prozessor jederzeit ausgelesen werden.

Die Erfindung ist oben anhand einer Steuereinrichtung zum Aufbereiten von Druckdaten für einen Hochleistungsdrucker beschrieben worden. Die erfindungsgemäße Steuereinrichtung ist gleichermaßen für jedwede Anwendung geeignet, bei welcher ein großer Datenstrom verarbeitet werden muß. Das I/O-Modul kann demnach allgemein als Sender-Baugruppe und das Rastermodul als Empfänger-Baugruppe betrachtet werden, wobei die Daten von der Sender-Baugruppe zur Empfänger-Baugruppe übertragen werden.

Bei dem oben beschriebenen Ausführungsbeispiel wird ein mit dem Multibus im wesentlichen kompatibler Datenbus verwendet. Die Erfindung ist jedoch nicht auf diese Art von Datenbus beschränkt, sondern kann für jeglichen parallelen Datenbus der für eine Multi-Prozessor-Architektur geeignet ist ausgelegt sein.

Bei den im Ausführungsbeispiel angegebenen Baugruppen ist ein in den Bus-Controller 9 integrierter DMA-Controller 10 vorgesehen.

Im Rahmen der Erfindung kann der DMA-Controller 10 selbstverständlich auch außerhalb des Bus-Controllers 9 auf der Baugruppe angeordnet sein.

Die oben beschriebenen Daten-Nachrichten übertragen jeweils ein Datenpaket von 32 Bytes. Die Größe dieser Datenpakete kann je nach Bedarf variiert werden und z. B. 64 oder 128 Bytes umfassen. Die mit einem automatischen angeforderten Nachrichtentransfer übertragene Datenmenge kann auf eine beliebige Größe von z. B. 4KB, 8KB, 16KB oder dergleichen festgelegt werden.

Die Erfindung kann folgendermaßen kurz zusammengefaßt werden: Sie betrifft eine elektronische Steuereinrichtung mit einem parallelen Datenbus und mehreren mit dem Datenbus verbundenen Baugruppen. Die Baugruppen weisen jeweils einen Prozessor und eine Speichereinrichtung auf und sind mittels eines Bus-Controllers mit dem Datenbus verbunden. Die Daten werden zwischen einer Sender-Baugruppe und einer Empfänger-Baugruppe mittels Nachrichten (Messages) übertragen. Der Datenbus entspricht im wesentlichen dem MULTIBUS II.

Die Erfindung zeichnet sich dadurch aus, daß der Bus-Controller der Sender-Baugruppe so ausgebildet ist, daß er ohne Inanspruchnahme des Prozessors der Sender-Baugruppe auf eine Anforderungs-Nachricht der Empfänger-Baugruppe in der Speichereinrichtung der Sender-Baugruppe gespeicherte Daten liest und an die Empfänger-Baugruppe übersendet.

Hierdurch wird zum einem der Prozessor der Sender-Baugruppe (I/O-Modul) entlastet und zum anderen die Kommunikation zwischen der Sender-Baugruppe und der Empfänger-Baugruppe (Rastermodul) beim Verhandeln bzw. Festlegen des Datentransfers wesentlich verringert und auf eine einzige Anforderungs-Nachricht reduziert. Diese elektronische Steuerungseinrichtung ist vorzugsweise für einen Steuereinrichtung zum Ansteuern eines Hochleistungsdruckers ausgebildet.

### Bezugszeichenliste

- 1.: Elektronische Steuereinrichtung
- 2.: I/O-Modul
- 3.: Rastermodul
- 4.: Serialiser-Modul
- 5.: Datenbus
- 6.: Pixel-Bus
- 7.: Hochleistungsdrucker
- 8.: Baugruppe
- 9.: Bus-Controller
- 10.: DMA-Controller
- 11.: Prozessor
- 12.: Speichereinrichtung
- 13.: Interner Rechnerbus

## Patentansprüche

1. Elektronische Steuereinrichtung mit einem parallelen Datenbus (5) und mehreren Baugruppen (8), die jeweils einen Prozessor (11), eine Speichereinrichtung (12) und einen DMA-Controller (10) aufweisen und mittels eines Bus-Controllers (9) mit dem Datenbus (5) verbunden sind, wobei Daten zwischen einer Sender-Baugruppe und einer Empfänger-Baugruppe mittels Nachrichten übertragen werden,
wobei der Bus-Controller (9) der Sender-Baugruppe derart ausgebildet ist, daß er auf eine Anforderungs-Nachricht der Empfänger-Baugruppe den DMA-Controller der Sender-Baugruppe zum Auslesen von Daten aus der Speichereinrichtung (12) der Sender-Baugruppe und zum Übertragen an die Empfänger-Baugruppe programmiert, ohne daß der Prozessor (11) der Sender-Baugruppe in Anspruch genommen wird.

2. Elektronische Steuereinrichtung nach Anspruch 1,
wobei der DMA-Controller (10) in den Bus-Controller (9) der Sender-Baugruppe integriert ist.

3. Elektronische Steuereinrichtung nach Anspruch 1 oder 2,
wobei der Datenbus (5) ein mit dem MULTIBUS II kompatibler Datenbus ist.

4. Elektronische Steuereinrichtung nach einem der Ansprüche 1 bis 3, wobei die Empfänger-Baugruppe zur Überwachung des Nachrichtentransfers einen Fail-Safe-Counter aufweist, der beim Empfangen einer Daten-Nachricht neu gestartet wird.

5. Verfahren zum Betreiben einer elektronischen Steuereinrichtung, wobei die elektronische Steuereinrichtung einen parallelen Datenbus (5) und mehrere Baugruppen (2) aufweist, die jeweils mit einem Prozessor (11) und einer Speichereinrichtung (12) versehen sind und mittels eines Bus-Controllers (9) mit dem Datenbus (5) verbunden sind, wobei Daten zwischen einer Sender-Baugruppe und einer Empfänger-Baugruppe mittels Nachrichten übertragen werden, und die Empfänger-Baugruppe durch Senden einer Anforderungs-Nachricht an die Sender-Baugruppe einen Datentransfer einleitet, und der Bus-Controller der Sender-Baugruppe ohne Inanspruchnahme des Prozessors der Sender-Baugruppe auf die Anforderungs-Nachricht in der Speichereinrichtung (12) der Sender-Baugruppe gespeicherte Daten an die Empfänger-Baugruppe übersendet wobei, ein auf der Sender-Baugruppe angeordneter DMA-Controller (10) auf Grundlage der mit der Anforderungs-Nachricht übermittelten Daten zum Lesen und Senden der in der Speichereinrichtung (12) der Sender-Baugruppe gespeicherten Daten vom Bus-Controller (9) programmiert wird.

6. Verfahren nach Anspruch 5, wobei eine elektrische Steuereinrichtung nach einem der Ansprüche 1 bis 4 verwendet wird.

7. Verfahren nach Anspruch 5 oder 6, wobei nach dem Empfang einer Anforderungs-Nachricht der Bus-Controller (9) der Sender-Baugruppe mehrere jeweils ein Datenpaket enthaltende Daten-Nachrichten an die Empfänger-Baugruppe sendet.

8. Verfahren nach einem der Ansprüche 5 bis 7, wobei mit der Anforderungs-Nachricht Informationen zum Programmieren eines an der Sender-Baugruppe angeordneten DMA-Controllers (10) für das Lesen und Senden der in der Speichereinrichtung (12) der Sender-Baugruppe gespeicherten Daten übertragen werden.

9. Verfahren nach einem der Ansprüche 5 bis 8, wobei mit dem Senden der Anforderungs-Nachricht ein auf der Empfänger-Baugruppe angeordneter DMA-Controller (10) zum Empfangen der Daten programmiert wird.

10. Verfahren nach einem der Ansprüche 5 bis 9, wobei die Daten mit mehreren Nachrichten, die jeweils ein Datenpaket enthalten, übertragen werden.

11. Verfahren nach einem der Ansprüche 5 bis 10, wobei die Sender-Baugruppe einen Puffer aufweist, in dem für jede in der Steuereinrichtung vorhandene Baugruppe ein Eintrag vorgesehen ist, so daß während eines Datentransfers die den Datentransfer kennzeichnenden Parameter in den jeweiligen Eintrag eingeschrieben und gespeichert werden und nach Beendigung des Datentransfers gelöscht werden.

12. Verfahren nach Anspruch 11, wobei beim Empfangen einer Anforderungs-Nachricht der Bus-Controller der Sender-Baugruppe prüft, ob der der Anforderungs-Nachricht sendenden Baugruppe zugeordnete Eintrag des Puffers bereits mit einen Datentransfer kennzeichnenden Daten beschrieben ist, um zu Verhindern, daß gleichzeitig zwei Datentransfers mit derselben Empfänger-Baugruppe eingeleitet werden.

13. Steuereinrichtung zum Aufbereiten von Druckdaten für einen Hochleistungsdrucker, mit den Merkmalen eines der Ansprüche 1 bis 4, wobei die Sender-Baugruppe ein I/O-Modul (2) bildet und mehrere Empfänger-Baugruppen vorgesehen sind, die jeweils ein Rastermodul (3) bilden.

## Revendications

1. Dispositif de commande électronique comprenant un bus de données (5) parallèle et plusieurs composants (8) qui comportent chacun un processeur (11), une unité de mémoire (12) et un contrôleur DMA (10) et qui sont reliés au moyen d'un contrôleur de bus (9) avec le bus de données (5), dans lequel des données sont transmises au moyen de messages entre un composant émetteur et un composant récepteur, dans lequel le contrôleur de bus (9) du composant émetteur est conçu de telle sorte que, à la suite d'un message d'appel émis par le composant récepteur, il programme le contrôleur DMA du composant émetteur pour lire les données de l'unité de mémoire (12) du composant émetteur et transmettre ces données vers le composant récepteur, sans faire appel au processeur (11) du composant émetteur.

2. Dispositif de commande électronique selon la revendication 1, dans lequel le contrôleur DMA (10) est intégré dans le contrôleur de bus (9) du composant émetteur.

3. Dispositif de commande électronique selon la revendication 1 ou 2, dans lequel le bus de données (5) est un bus de données compatible avec le MULTIBUS II.

4. Dispositif de commande électronique selon l'une des revendications 1 à 3, dans lequel, pour le contrôle du transfert des messages, le composant récepteur est muni d'un compteur de sécurité intégré, qui est réactivé à chaque réception d'un message de données.

5. Procédé destiné à l'exploitation d'un dispositif de commande électronique, dans lequel le dispositif de commande électronique est muni d'un bus de données (5) parallèle et de plusieurs composants (8) qui comportent chacun un processeur (11) et une unité de mémoire (12), et qui sont reliés avec le bus de données (5) au moyen d'un contrôleur de bus (9), dans lequel des données sont transmises au moyen de messages entre un composant émetteur et un composant récepteur et le composant récepteur, à la suite de l'émission d'un message d'appel vers le composant émetteur, initialise un transfert de données et, en réponse au message d'appel, le contrôleur de bus du composant émetteur transmet vers le composant récepteur des données stockées dans l'unité de mémoire (12) du composant émetteur, sans faire appel au processeur du composant émetteur, dans lequel un contrôleur DMA (10), agencé au niveau du composant émetteur, est programmé par le contrôleur de bus (9) sur la base des données transmises avec le message d'appel pour lire et émettre les données stockées dans l'unité de mémoire (12) du composant émetteur.

6. Procédé selon la revendication 5, dans lequel on utilise un dispositif de commande électrique selon l'une des revendications 1 à 4.

7. Procédé selon la revendication 5 ou 6, dans lequel, à la suite de la réception d'un message d'appel, le contrôleur de bus (9) du composant émetteur émet vers le composant récepteur plusieurs messages de données contenant chacun un paquet de données.

8. Procédé selon l'une des revendications 5 à 7, dans lequel, conjointement au message d'appel, sont transmises des informations destinées à la programmation d'un contrôleur DMA (10), agencé au niveau du composant émetteur, pour lire et émettre les données stockées dans l'unité de mémoire (12) du composant émetteur.

9. Procédé selon l'une des revendications 5 à 8, dans lequel, conjointement à l'émission du message d'appel, un contrôleur DMA (10), agencé au niveau du composant récepteur, est programmé pour la réception des données.

10. Procédé selon l'une des revendications 5 à 9, dans lequel les données sont transmises avec plusieurs messages, qui contiennent chacun un paquet de données.

11. Procédé selon l'une des revendications 5 à 10, dans lequel le composant émetteur est muni d'un tampon, dans lequel est prévue une entrée pour chaque composant disponible dans le dispositif de commande, de telle sorte que, pendant un transfert de données, les paramètres caractérisant le transfert de données sont intégrés et sont stockés dans l'entrée correspondante et sont supprimés à la fin du transfert de données.

12. Procédé selon la revendication 11, dans lequel pendant la réception d'un message d'appel, le contrôleur de bus du composant émetteur vérifie que l'entrée du tampon affectée au composant émettant le message d'appel contient déjà les données caractérisant un transfert de données, afin d'empêcher que deux transferts de données soient initialisés en même temps avec le même composant récepteur.

13. Dispositif de commande destiné à la préparation de données à imprimer pour une imprimante à haut débit, comprenant les caractéristiques selon l'une des revendications 1 à 4, dans lequel le composant émetteur forme un module d'entrées et sorties (2), et dans lequel il est prévu plusieurs composants récepteurs, qui forment chacun un module matriciel (3).

## Claims

1. Electronic control device with a parallel data bus (5) and a plurality of assemblies (8) that each comprise a processor (11), a memory device (12) and a DMA controller (10) and that are connected to the data bus (5) by means of a bus controller (9), data being transmitted between a transmitter assembly and a receiver assembly by means of messages, the bus controller (9) of the transmitter assembly being designed such that, in response to a request message of the receiver assembly, it programs the DMA controller of the transmitter assembly to read out data from the memory device (12) of the transmitter assembly and to send them to the receiver assembly, without making use of the processor (11) of the transmitter assembly.

2. Electronic control device according to claim 1, wherein the DMA controller (10) is integrated into the bus controller (9) of the transmitter assembly.

3. Electronic control device according to claim 1 or 2, wherein the data bus (5) is a data bus compatible with the MULTIBUS II.

4. Electronic control device according to one of the claims 1 to 3, wherein the receiver assembly comprises a fail-safe counter for monitoring the message transfer that is restarted upon reception of a data message.

5. Method for operating an electronic control device, wherein the electronic control device comprises a parallel data bus (5) and a plurality of assemblies (2) that are each provided with a processor (11) and a memory device (12) and are connected to the data bus (5) by means of a bus controller (9), data being transmitted between a transmitter assembly and a receiver assembly by means of messages, and the receiver assembly initiates a data transfer by sending a request message to the transmitter assembly, and the bus controller of the transmitter assembly, without making use of the processor of the transmitter assembly, transmits data stored in the memory device (12) of the transmitter assembly to the receiver assembly in response to the request message, wherein a DMA controller (10) arranged on the transmitter assembly is programmed by the bus controller (9) on the basis of the data communicated with the request message, being programmed to read and transmit the data stored in the memory device (12) of the transmitter assembly.

6. Method according to claim 5, wherein an electric control device according to one of the claims 1 to 4 is employed.

7. Method according to claim 5 or 6, wherein, following the reception of a request message, the bus controller (9) of the transmitter assembly sends a plurality of data messages each containing a data packet to the receiver assembly.

8. Method according to one of the claims 5 to 7, wherein information for programming a DMA controller (10) arranged at the transmitter assembly for reading and sending the data stored in the memory device (12) of the transmitter assembly are transmitted with the request message.

9. Method according to one of the claims 5 to 8, wherein a DMA controller (10) arranged on the receiver assembly is programmed for the reception of the data with the transmission of the request message.

10. Method according to one of the claims 5 to 9, wherein the data are transmitted with a plurality of messages that each contain a data packet.

11. Method according to one of the claims 5 to 10, wherein the transmitter assembly comprises a buffer in which an entry is provided for each assembly present in the control device, so that the parameters **characterizing** the data transfer are written into the respective entry and stored during a data transfer and are erased after the conclusion of the data transfer.

12. Method according to claim 11, wherein, upon reception of a request message, the bus controller of the transmitter assembly checks whether the entry of the buffer allocated to the assembly sending the request message is already written with data **characterizing** a data transfer in order to prevent two data transfers from being simultaneously initiated with the same receiver assembly.

13. Control device for editing print data for a high-performance printer, comprising the features of one of the claims 1 to 4, wherein the transmitter assembly forms an I/O module (2) and a plurality of receiver assemblies that each form a raster module (3) are provided.
